# FASCICULE DE BREVET EUROPEEN

(11) **EP 2 686 160 B1**
(45) Date de publication et mention de la délivrance du brevet: **04.12.2019**
(21) Numéro de dépôt: 12708875.5
(22) Date de dépôt: 16.03.2012
(51) Int. Cl.: B29D 11/00, B29C 51/42, B29C 51/14, G02B 1/08

(54) **PROCÉDÉ DE FABRICATION D'UNE LENTILLE POLARISANTE**
VERFAHREN ZUR HERSTELLUNG EINER POLARISIERENDEN LINSE
METHOD FOR PRODUCING A POLARISING LENS

(30) Priorité: 18.03.2011 FR 1152281
(43) Date de publication de la demande: 22.01.2014
(73) Titulaire: BNL Eurolens, 01200 Bellegarde sur Valserine (FR)
(72) Inventeur: CLERC, Didier, F-01200 Bellegarde sur Valserine (FR); LEDIEN, Franck, 01130 Echallon (FR)
(74) Mandataire: Lavialle, Bruno François Stéphane
(86) Numéro de dépôt international: PCT/EP2012/054729
(87) Numéro de publication internationale: WO 2012/126859

(56) Documents cités:
- WO-A2-2006/094313
- US-A1- 2010 110 542

## Description

La présente invention concerne un procédé de réalisation de lentilles, préférentiellement des lentilles polarisantes. Plus particulièrement, les lentilles polarisantes obtenues par le procédé de l'invention sont utilisables sur une monture pour former une paire de lunettes comme une paire de lunettes solaires correctrices ou non correctrices, de type masque ou traditionnelle, ou une paire de lunettes de protection correctrices ou non correctrices.

Le procédé de l'invention est particulièrement adapté pour la réalisation de lentilles non correctrices. Par lentille non-correctrice, on entend une lentille sans puissance astigmatique ni sphérique, telles que celles concernées par les normes relatives aux lunettes solaires ou aux lunettes de protection, comme la norme EN 1836.

Les lunettes dont les lentilles incorporent un filtre polarisant sont très répandues et sont par exemple utilisées dans toutes les activités réalisées dans des endroits, comme la mer ou les étendues neigeuses, comportant des zones de fortes réflexions de la lumière. Ces fortes réflexions peuvent en effet gêner la vision et dans certains cas constituer des sources d'éblouissement. De telles lunettes ont également un fort intérêt pour la conduite de véhicules, car elles permettent de limiter voire d'éliminer la perception des réflexions parasites sur les pare-brises, et par exemple les pare-brises d'automobiles.

Dans ces lunettes, sont utilisées des lentilles polarisantes comportant un filtre polarisant généralement réalisé sous la forme d'un film de polymère d'alcool polyvinylique (ou PVA). De tels films polarisants sont obtenus classiquement en incorporant des molécules de colorants dichroïques et/ou des cristaux d'iode dichroïques dans un film à base d'alcool polyvinylique, puis en étirant le film uniaxialement de façon à orienter les molécules de colorants dichroïques et/ou les cristaux d'iode dichroïques selon la direction d'étirement. On entend, par colorant dichroïque, une espèce pouvant être de nature moléculaire ou cristalline et présentant une absorption privilégiée du rayonnement électromagnétique visible pour une orientation spatiale particulière. Les films polarisants ainsi obtenus sont peu onéreux et possèdent une qualité optique qui est compatible avec de nombreuses applications, notamment des applications ophtalmiques.

Le film de PVA est ensuite recouvert d'une ou plusieurs couches de matériau protecteur pour former la lentille.

Un procédé de fabrication d'une lentille polarisante est connu du document WO 2006/094313 ou du document US 2010/0110542 A1.

Un but de l'invention est de fournir une structure alternative aux structures connues, qui présente une bonne durabilité et qui soit réalisable au moins en partie par injection.

A cet effet, on prévoit une lentille polarisante comportant, successivement, une couche de support mécanique comprenant un polymère thermoplastique polycarbonate formant une face arrière de la lentille, une couche intermédiaire d'alcool polyvinylique, et une couche externe en triacétate de cellulose formant une face avant de la lentille.

Ainsi, le polycarbonate apporte une résistance mécanique tandis que le triacétate de cellulose apporte une résistance aux interactions chimiques. En utilisation sur une monture de lunettes, la couche externe est orientée à l'opposé du visage du porteur. Les propriétés du triacétate de cellulose et du polycarbonate se combinent alors de telle manière que ces matériaux se protègent mutuellement d'au moins une partie des agressions extérieures.

De telles lentilles ainsi que leur procédé de fabrication présentent également un avantage notable par rapport aux lentilles de l'état de l'art. En effet, les lentilles polarisantes à base de thermoplastique polycarbonate sont réalisées notamment par l'utilisation d'un film polarisant comprenant une couche avant de polycarbonate biréfringent, un film d'alcool polyvinylique, et une couche arrière de polycarbonate étiré, cette dernière étant amené à fusionner avec le polycarbonate représentant le matériau constitutif de la lentille lors de la mise en œuvre du procédé d'injection. On comprendra aisément que les contraintes liées à l'utilisation d'une couche de polycarbonate biréfringent et d'une couche de polycarbonate étiré, entraîne des limitations tant dans l'accessibilité du choix des matériaux constitutifs du film polarisant, que dans ses conditions de mise en œuvre, ainsi que dans les propriétés et les performances des lentilles polarisantes ainsi obtenues.

Le procédé de fabrication selon l'invention comprend les étapes de :
- préchauffer un film laminé comportant une couche externe de triacétate de cellulose (TAC), une couche intermédiaire d'alcool polyvinylique (PVA) et une couche externe de polycarbonate (PC), avec des températures différentes pour les couches externes du film laminé,
- thermoformer le film laminé en effectuant un chauffage différencié des couches externes,
- disposer le film thermoformé dans un moule à la forme de la lentille de telle manière que la couche externe de triacétate de cellulose s'étende contre une paroi du moule,
- injecter dans le moule du polycarbonate de telle manière que la couche de polycarbonate fusionne avec le polycarbonate injecté pour former la couche de support mécanique de la lentille,
- démouler la lentille ainsi formée.

Le chauffage différencié du film permet de réaliser un thermoformage adapté à l'hétérogénéité des matériaux constituant les couches externes du film. En outre, le préchauffage différencié permet de faciliter l'étape de thermoformage et donc d'améliorer la qualité finale de la lentille.

D'autres caractéristiques et avantages de l'invention ressortiront à la lecture de la description qui suit d'un mode de réalisation particulier non limitatif de l'invention.

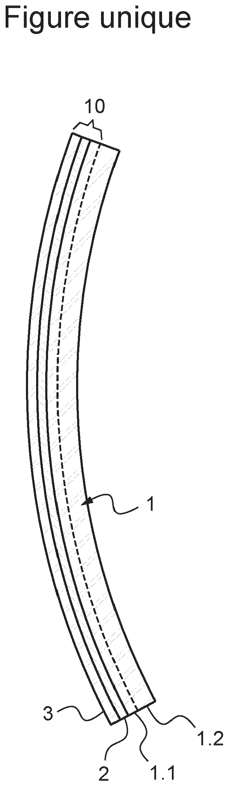

Il sera fait référence à la figure unique annexée représentant en coupe transversale une lentille obtenue par le procédé conforme à l'invention.

Il est fait référence à une lentille polarisante correctrice ou non correctrice comportant, successivement, une couche de support mécanique 1 en polycarbonate (ou PC), une couche intermédiaire 2 en alcool polyvinylique (PVA) et une couche externe 3 en triacétate (TAC) de cellulose. Les couches adhésives éventuellement nécessaires pour maintenir une cohésion des couches ne sont pas mentionnées. La lentille polarisante est préférentiellement une lentille polarisante non correctrice.

La couche de support mécanique 1 forme la face arrière de la lentille et est agencée pour donner à la lentille ses propriétés mécaniques et notamment sa rigidité. L'épaisseur de la couche de support mécanique est ainsi définie en fonction de la rigidité et de la résistance mécanique recherchées. Elle est également définie en accord avec les propriétés optiques de la lentille.

La couche externe 3 forme la face avant de la lentille.

La face arrière et la face avant de la lentille peuvent éventuellement être recouvertes par tous revêtements usuellement utilisés dans le domaine des lentilles ophtalmiques pour apporter à la lentille polarisante une fonction complémentaire. Parmi les revêtements fonctionnels peuvent être disposés sur l'une et /ou l'autre face de la lentille, on peut coter à titre non limitatif les revêtements permettant de conférer en plus à la lentille une fonction antichoc, une fonction antireflet, une fonction anti-abrasion, une fonction antisalissure, une fonction antibuée, une fonction antistatique ou une combinaison de certaines de ces fonctions.

Le procédé comprend l'étape de prendre un film laminé 10 comportant la couche externe de triacétate de cellulose 3, la couche intermédiaire d'alcool polyvinylique 2 et une couche externe de polycarbonate 1.1.

Le film 10 est ensuite découpé selon un contour correspondant à celui de la lentille.

Le film 10 découpé est ensuite bombé. Cette opération est réalisée par thermoformage.

Le thermoformage est précédé d'un séchage qui permet d'améliorer le comportement du film lors du thermoformage et de stabiliser les couleurs du film 10.

Après le séchage est réalisé un préchauffage du film 10 visant à faciliter le thermoformage. Lors du préchauffage, les couches externes sont chauffées à des températures différentes.

Le thermoformage proprement dit est réalisé dans un moule comportant une partie concave et une partie convexe. Le film 10 est disposé dans le moule dont les parties concave et convexe, en contact chacune avec une des couches externes, sont chauffées à des températures différentes. La déformation du film 10 résulte de l'application, en présence de chaleur, d'une pression par les parties de moule.

D'une façon avantageuse, dans ce procédé de thermoformage, la pression exercée pour permettre la déformation du film est exercée de façon progressive et contrôlée. Cette application contrôlée de la pression par la mise en œuvre de moyens adaptés au sein du moule permet de contrôler la déformation.

Les températures de chauffage tiennent compte des températures de transition vitreuse des matériaux des couches externes et sont notamment ajustées en fonction de ce paramètre physique.

Selon un mode de réalisation privilégié, le préchauffage du film 10 s'effectue également dans ledit moule.

Le procédé se poursuit par l'étape de disposer le film 10 thermoformé dans un moule d'injection à la forme de la lentille.

Dans un mode alternatif du procédé, une étape de séchage du film thermoformé peut être mise en œuvre préalablement à l'étape où le film thermoformé est disposé dans le moule d'injection, notamment dans le cas où le film n'est pas immédiatement utilisé après l'étape de thermoformage.

Le film 10 bombé est disposé dans le moule d'injection de telle manière que la couche externe de triacétate de cellulose 3 s'étende contre une paroi du moule tandis qu'un espace demeure entre la couche externe 1.1 et la paroi du moule en regard.

Il est ensuite procédé à une injection de polycarbonate thermoplastique dans ledit espace du moule de telle manière que la couche externe 1.1 de polycarbonate fusionne avec le polycarbonate thermoplastique injecté 1.2 pour former la couche de support mécanique 1 de la lentille. On notera sur la figure que la couche externe de polycarbonate 1.1 est séparée du polycarbonate injecté 1.2 par un trait pointillé aux fins d'expliquer le procédé de réalisation. En réalité, sur la lentille terminée n'apparaît normalement qu'une couche de polycarbonate car la couche externe 1.1 de polycarbonate du film 10 fusionne avec le polycarbonate injecté 1.2 pour former une couche unique. Les paramètres de l'opération d'injection, et plus particulièrement la température du polycarbonate injecté, la vitesse et/ou la pression d'injection, la position du ou des points d'injection, sont déterminées de manière spécifique et liées à la nature du film polarisant utilisé dans le procédé. Notamment, la température d'injection du polycarbonate est réalisée à une température inférieure à celle traditionnellement mise en œuvre.

Une fois le polycarbonate suffisamment refroidi, il est procédé au démoulage de la lentille ainsi formée.

Bien entendu, l'invention n'est pas limitée aux modes de réalisation décrits dans la présente description mais englobe toute variante entrant dans le champ de l'invention telle que définie par les revendications.

En particulier, la lentille peut comporter une portion correctrice.

La lentille peut avoir sa forme définitive ou bien être de forme circulaire. Dans ce dernier cas, c'est à l'opticien d'usiner la lentille (généralement par fraisage) pour lui donner une forme adaptée à la monture à laquelle elle est destinée.

L'invention est applicable aux lunettes de type classique comportant deux lentilles mais également aux lunettes de type masque comportant une lentille unique.

## Revendications

1. Procédé de réalisation d'une lentille, comprenant les étapes de :
- préchauffer un film laminé (10) comportant une couche externe de triacétate de cellulose (3), une couche intermédiaire d'alcool polyvinylique (2) et une couche externe de polycarbonate (1.1), avec des températures différentes pour les couches externes du film laminé,
- thermoformer le film laminé (10) en effectuant un chauffage différencié des couches externes,
- disposer le film thermoformé dans un moule à la forme de la lentille de telle manière que la couche externe de triacétate de cellulose (3) s'étende contre une paroi du moule,
- injecter dans le moule du polycarbonate de telle manière que la couche de polycarbonate (1.1) fusionne avec le polycarbonate injecté (1.2) pour former la couche de support mécanique de la lentille (1),
- démouler la lentille ainsi formée.

2. Procédé selon la revendication 1, dans lequel le préchauffage est précédé d'un séchage du film (10).

3. Procédé selon la revendication 1, dans lequel le thermoformage est réalisé dans un moule comportant une pièce convexe et une pièce concave.

4. Procédé selon la revendication 3, dans lequel, pendant le thermoformage, la partie convexe et la partie concave sont chauffées à des températures différentes.

5. Procédé selon la revendication 1, dans lequel la déformation du film (10) pendant l'étape de thermoformage est réalisée par application d'une pression contrôlée.

## Patentansprüche

1. Verfahren zur Herstellung einer Linse, umfassend die folgenden Schritte:
- Vorwärmen einer laminierten Folie (10), die eine äußere Schicht aus Cellulosetriacetat (3), eine Zwischenschicht aus Polyvinylalkohol (2) und eine äußere Schicht aus Polycarbonat (1.1) umfasst, mit unterschiedlichen Temperaturen für die äußeren Schichten der laminierten Folie,
- Thermoformen der laminierten Folie (10), wobei eine differenzierte Erwärmung der äußeren Schichten durchgeführt wird,
- Anordnen der thermogeformten Folie in einem Werkzeug mit der Form einer Linse derart, dass sich die äußere Schicht aus Cellulosetriacetat (3) an einer Wand des Werkzeugs erstreckt,
- Einspritzen von Polycarbonat in das Werkzeug derart, dass die Polycarbonatschicht (1.1) mit dem eingespritzten Polycarbonat (1.2) verschmilzt, um die mechanische Trägerschicht der Linse (1) zu bilden,
- Entformen der so gebildeten Linse.

2. Verfahren nach Anspruch 1, bei welchem dem Vorwärmen ein Trocknen der Folie (10) vorausgeht.

3. Verfahren nach Anspruch 1, bei dem das Thermoformen in einem Werkzeug ausgeführt wird, das ein konvexes Teil und ein konkaves Teil umfasst.

4. Verfahren nach Anspruch 3, bei dem das konvexe Teil und das konkave Teil während des Thermoformens auf unterschiedliche Temperaturen erwärmt werden.

5. Verfahren nach Anspruch 1, bei dem die Verformung der Folie (10) während des Schritts des Thermoformens durch Ausüben eines kontrollierten Drucks ausgeführt wird.

## Claims

1. Process for producing a lens, comprising the steps of:
- preheating a laminated film (10) comprising an outer layer of cellulose triacetate (3), an intermediate layer of polyvinyl alcohol (2) and an outer layer of polycarbonate (1.1), with different temperatures for the outer layers of the laminated film,
- thermoforming the laminated film (10) by carrying out a differentiated heating of the outer layers,
- placing the thermoformed film in a lens-shaped mold so that the outer layer of cellulose triacetate (3) extends against one wall of the mold,
- injecting polycarbonate into the mold so that the polycarbonate layer (1.1) merges with the injected polycarbonate (1.2) in order to form the mechanical support layer of the lens (1),
- removing the lens thus formed from the mold.

2. Process according to Claim 1, wherein the preheating is preceded by a drying of the film (10).

3. Process according to Claim 1, wherein the thermoforming is carried out in a mold comprising a convex part and a concave part.

4. Process according to Claim 3, wherein, during the thermoforming, the convex part and the concave part are heated at different temperatures.

5. Process according to Claim 1, wherein the deformation of the film (10) during the thermoforming step is carried out by application of a controlled pressure.
